# FASCICULE DE BREVET EUROPEEN

(11) **EP 1 984 232 B1**
(45) Date de publication et mention de la délivrance du brevet: **04.09.2013**
(21) Numéro de dépôt: 07730969.8
(22) Date de dépôt: 14.02.2007
(51) Int. Cl.: B62D 21/15, B62D 29/00, B60R 19/34, C22C 21/00

(54) **COMPOSANTS DE STRUCTURE DE CAISSE AUTOMOBILE POUR ABSORPTION D'ÉNERGIE DE CHOC EN ALLIAGE D ALUMINIUM DE LA FAMILLE 3000**
AUFPRALLENERGIEABSORBIERENDES STRUKTURBAUTEIL EINES FAHRZEUGES AUS EINER ALUMINIUMLEGIERUNG DER 3000-REIHE
IMPACT-ENERGY-ABSORBING STRUCTURAL COMPONENTS MADE OF A 3000 SERIES ALUMINIUM ALLOY FOR THE BODY OF A MOTOR VEHICLE

(30) Priorité: 15.02.2006 FR 0601305
(43) Date de publication de la demande: 29.10.2008
(73) Titulaire: Constellium Extrusions France, 89600 Saint-Florentin (FR)
(72) Inventeur: BERNARD, Alexandre, F-21200 Beaune (FR); VILOIN, Patrick, F-21220 Collonges Les Bevy (FR); MORERE, Bruce, F-21000 Dijon (FR)
(74) Mandataire: Fénot, Dominique
(86) Numéro de dépôt international: PCT/FR2007/000257
(87) Numéro de publication internationale: WO 2007/093701

(56) Documents cités:
- EP-A- 1 125 798
- EP-B- 1 251 988
- DE-A1- 4 219 938
- US-A- 3 420 192

## Description

### Domaine de l'invention

L'invention concerne des composants de structure de caisse de véhicule automobile destinés à absorber de l'énergie de façon irréversible lors d'une collision contre un obstacle ou choc. On citera par exemple le cas de l'absorbeur de choc utilisé, en association avec une poutre, pour constituer l'ensemble pare-chocs dudit véhicule. La poutre est disposée transversalement par rapport à la direction de déplacement du véhicule, et le ou les absorbeurs sont généralement disposés soit transversalement, soit longitudinalement par rapport à cette direction. Un absorbeur de chocs est désigné parfois sous le terme « élément de déformation » ou « crash box ».

### Etat de la technique

Jusqu'au milieu des années 90, les composants destinés à absorber de l'énergie de façon irréversible lors d'une collision contre un obstacle, ou choc, notamment les poutres de pare-chocs, étaient constitués d'une tôle mise en forme, en général en acier. Les exigences plus sévères des constructeurs d'automobiles, notamment avec l'apparition des tests de réparabilité, ont conduit à faire évoluer cette fonction et amené deux types d'évolution. D'une part, la géométrie et les matériaux constituant les composants de structure ou poutres ont évolué, conduisant à l'utilisation de poutres tubulaires, multicellulaires ou non, en alliage d'aluminium ou en acier.

D'autre part, dans le cas notamment des poutres de pare-chocs, une interface absorbante entre les poutres et les supports longitudinaux des véhicules a été introduite: les absorbeurs de chocs, encore appelés éléments de déformation ou "crash boxes".

Cette double évolution a répondu à la nécessité, en Europe notamment, de disposer d'un système poutre/absorbeur ou poutre/support ou encore composant de structure/support, non plus seulement résistant, c'est-à-dire qui se déforme sans plastifier, mais absorbant c'est-à-dire qui se déforme en absorbant de l'énergie de manière maîtrisée.

Le composant de structure de caisse automobile a donc un double rôle : d'une part se déformer de façon élastique lors de faibles chocs ou collisions contre un obstacle, d'autre part absorber l'énergie et transmettre l'effort de façon maîtrisée, en particulier sans s'effondrer de façon brutale en cours de déformation, aux absorbeurs ou aux supports.

Pour ce faire, une première voie a consisté dans l'optimisation de la matière et de la géométrie des poutres en question.

L'utilisation de poutres tubulaires multicellulaires en particulier participe de cette évolution. Extrudées en aluminium ou reconstituées à partir de tôles en acier ou en aluminium, leur intérêt principal réside dans le maintien d'une inertie importante au cours du choc, inertie qui permet, notamment dans le cas du pare-chocs, d'assurer le plus longtemps possible son rôle structural, en particulier à l'avant du véhicule.

Par exemple, le brevet US 5340178, de Chrysler, revendique l'utilisation d'une poutre de ce type en lieu et place des poutres classiques ouvertes, généralement en acier à haute limite élastique.

Les absorbeurs, quant à eux, peuvent être réalisés à partir de profilés en aluminium à section multi-cellulaire disposés longitudinalement ou transversalement par rapport à la direction de déplacement du véhicule. Ainsi, le brevet FR 2760708 (Alusuisse) décrit un pare-chocs réalisé à partir d'une poutre et d'absorbeurs constitués d'un profilé positionné longitudinalement et subdivisé par au moins une barrette intérieure longitudinale.

La demande de brevet DE 10041371 (Honda) propose une géométrie polygonale, subdivisée en plusieurs cellules. D'autres véhicules sont équipés d'absorbeurs multicellulaires disposés transversalement, comme par exemple l'Audi A2. Ce type de disposition est également décrit dans la demande de brevet EP 1125798 (Kobe Steel).

La même évolution peut être observée pour les autres composants de structure de caisse tels que, de façon non exclusive, les renforts latéraux de portières, pieds milieu, avant ou arrière, encore appelés montants A, B et C, longerons de seuils de portières, rails anti-intrusion....

Parallèlement à cette voie consistant dans l'optimisation des formes extérieures du composant et de ses nervures ou cloisons internes éventuelles, une autre réside dans l'addition de matière à l'intérieur dudit composant ou de tout ou partie des cellules le constituant.

Ainsi, la demande de brevet JP 2001182769, de Showa Aluminum Corporation, décrit des absorbeurs du type « crash box » réalisés en profilés d'aluminium ou structures tubulaires creuses, mono ou multicellulaires, emplis en totalité de matériau pouvant être du bois de balsa.

Le brevet US 6062632, de Solectria Corporation, revendique un ensemble d'absorption d'énergie toujours du type « crash box », constitué de plusieurs cellules alignées selon l'axe du véhicule et ouvertes à leurs extrémités, assemblées entre elles côte à côte, emplies chacune d'un matériau léger pouvant être notamment du bois de balsa ou une mousse synthétique dimensionellement stable.

Le brevet US 4671550, de Arpi Co., décrit quant à lui un pare-chocs en matériau composite dont les diverses parois répondent à une architecture bien particulière, chaque cellule formée par lesdites parois étant emplie de mousse de polyuréthane rigide ou de bois de balsa dans une matrice de résine.

Enfin de nombreux brevets dont EP1103428, de Benteler, décrivent des ensembles pare-chocs comportant, entre la poutre ou traverse déformable et le bouclier avant en polymère, des mousses synthétiques ou naturelles, mais il s'agit là d'un autre domaine, ces derniers aménagements étant destinés à améliorer le comportement élastique lors de chocs de faible importance.

Dans tous les cas pré-cités toutefois, lorsque des alliages d'aluminium, notamment sous forme de profilés extrudés selon le préambule de la revendication 1 par exemple dans les documents EP 1125798 et JP 2001182769 sont utilisés, il s'agit d'alliages à durcissement structural, de la série 6xxx ou de la série 7xxx, selon la nomenclature de l' « Aluminum Association ».

Dans le cas des ensembles pare-chocs, constitués d'une poutre et d'absorbeurs ou « crash boxes », les assemblages utilisés sont généralement des assemblages mécaniques (rivetage, vissage). Ainsi, le brevet FR 2760708 précise que l'assemblage entre l'absorbeur et la poutre est vissé ou riveté. Ce choix peut être rendu nécessaire par la présence de matériaux différents, par exemple l'acier et l'aluminium, comme dans le cas de la Mercedes Classe C. Dans le cas où on utilise le même matériau, il est possible d'assembler la poutre et les absorbeurs par soudage, comme c'est le cas par exemple pour les pare-chocs avant de la Citroën C4 et de la Peugeot 307, et arrière de la Mini Cooper.

### Problème posé

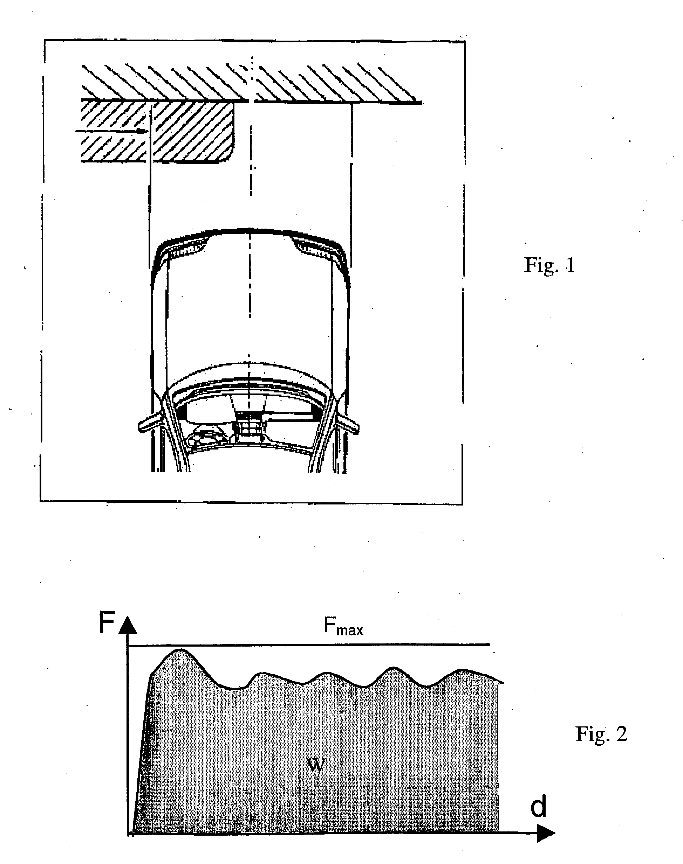

La capacité d'absorption d'énergie d'un ensemble pare-chocs de véhicule, et en particulier l'absorbeur ou « crash box », tout comme plusieurs autres composants de structure de caisse, peut être formalisée de la manière suivante:
Lorsqu'on enregistre la courbe « force-déplacement » au niveau de l'impacteur au cours du choc, le niveau d'effort ne doit pas dépasser une valeur Fₘₐₓ spécifiée, tout en maximisant l'aire sous la courbe, représentative de l'énergie absorbée, comme illustré sur les figures 1 et 2. L'ensemble pare-chocs ou le composant sera optimal lorsque sa réponse sera la plus "plate" possible et proche du niveau Fₘₐₓ.

Il est donc nécessaire, dans le domaine des ensembles pare-chocs et notamment de l'absorbeur ou « crash box », mais aussi plus généralement des autres composants de structure de caisse sollicités lors d'une collision avec un obstacle, ou choc, tels que les renforts latéraux de portières, pieds milieu, arrière ou avant, longerons de seuil de portière, rails anti-intrusion, etc..., de connaître et de maîtriser les phénomènes qui régissent l'effort F au cours de la déformation d. Il convient également de retarder le plus possible l'effondrement local du composant qui dégrade considérablement la transmission d'énergie au reste de la structure.

Par ailleurs, les composants de structure de caisse, et en particulier ceux dont le rôle est essentiel en cas de choc, dont les absorbeurs ou « crash boxes », doivent présenter une stabilité de leurs caractéristiques et donc de leur comportement dans le temps ; ceci est d'autant plus important lorsque le composant en question est soumis au traitement de cataphorèse et/ou cuisson de la peinture avec l'ensemble de la structure de caisse, mais aussi lors de l'exposition à des températures relativement élevées en service. Cette absence de stabilité ou robustesse dans le temps est souvent un point particulièrement bloquant pour ce type d'application.

Le but de l'invention est donc de fournir un composant de structure de caisse de véhicule, notamment un absorbeur ou « crash box », permettant une bonne absorption de l'énergie avec une transmission maîtrisée de l'effort en cas de chocs, et ce dans des conditions de reproductibilité et de robustesse du comportement ainsi que de stabilité dans le temps améliorées, tout en demeurant aussi léger et compact que possible, et dans des conditions de coût plus favorables, par rapport aux solutions connues jusqu'ici.

### Objet de l'invention

L'invention a pour objet un composant de structure de caisse de véhicule automobile, selon la revendication 1.

Selon un mode de réalisation préférée, ledit alliage d'aluminium est choisi parmi les alliages du type 3003, 3004, 3005 ou 3103 selon la nomenclature de l' « Aluminum Association ».

Selon un autre mode de réalisation avantageuse, l'alliage d'aluminium est obtenu à partir d'un alliage de la série 3xxx selon la nomenclature de l' « Aluminum Association », dans lequel on a procédé à une addition complémentaire de magnésium.

De manière préférentielle, ladite addition de magnésium est réalisée de manière à porter sa teneur dans la fourchette de 0,5 à 1 %.

Selon une autre variante de réalisation, le profilé extrudé en alliage d'aluminium de la série 3xxx est soumis à un écrouissage avec un taux de déformation permanente jusqu'à 5 %, typiquement par traction.

Un tel composant de structure de caisse automobile est utilisé pour constituer notamment un longeron de seuil de portière, un pied milieu, avant ou arrière, un renfort latéral de portière, un rail anti-intrusion ou un composant d'un ensemble pare-chocs.

Plus particulièrement, le dit composant d'ensemble pare-chocs peut être un absorbeur de chocs, encore appelé élément de déformation ou « crash box », destiné à réaliser l'interface entre la poutre de pare-chocs et le reste de la structure de caisse ou support longitudinal du véhicule.

Enfin, un composant de structure ainsi réalisé est encore plus particulièrement avantageux lorsqu'il est assemblé au reste de la structure de caisse par soudage.

### Description des figures

La figure 1 représente schématiquement les conditions d'un « crash test » ou simulation de choc frontal, c'est à dire une collision avec un obstacle sur l'avant du véhicule.
La figure 2 représente un exemple de courbe « force-déplacement » montrant l'absorption d'énergie par un ensemble pare-chocs au cours d'un tel choc frontal.
La figure 3 représente la section d'un des profilés dénommé « crash box 1 » utilisé lors des essais de comportement au choc ou « crash ».
La figure 4 représente la section d'un autre des profilés dénommé « crash box 2 » utilisé lors de ces mêmes essais.
La figure 5 représente la section du troisième des profilés dénommé « crash box 3 » utilisé lors de ces mêmes essais.

### Description de l'invention

L'invention repose sur la constatation inattendue faite par la demanderesse que les alliages de la série 3xxx, selon la nomenclature de l' « Aluminium Association », répondent nettement mieux aux conditions requises pour de telles applications à des composants de structure de caisse de véhicule automobile soumis au crash que les alliages utilisés jusqu'ici à cet effet, à savoir ceux de la série 6xxx et en particulier du type 6060 ou de la série 7xxx. Parmi les caractéristiques particulièrement avantageuses pour ce type d'application, et plus spécifiquement les absorbeurs de chocs, encore appelés éléments de déformation ou « crash boxes », et qui constituent l'interface entre la poutre de pare-chocs et le reste de la structure de caisse ou support longitudinal du véhicule, on peut notamment citer :
- Des caractéristiques mécaniques favorables à la fois à l'absorption d'énergie en cas de choc lié à la collision entre le véhicule et un obstacle, ou « crash », et au rôle de « fusible » que constituent ces absorbeurs vis à vis du reste de la structure de caisse. Typiquement, on peut retenir une limite d'élasticité Rp_{0,2} de 50 à 100 MPa et une charge de rupture Rm de 100 à 200 MPa,
- Une faible dispersion pour une bonne maîtrise de ces caractéristiques mécaniques, préoccupation constante dans des applications de grande série telles que celles de l'industrie automobile, et tout particulièrement lorsqu'il s'agit de pièces liées à la sécurité, en cas de crash en l'occurrence ; en effet, toute fluctuation des caractéristiques mécaniques se traduit par une variation importante de l'énergie absorbée et de l'effort transmis en situation de crash,
- Une bonne stabilité, dans le temps également, de ces caractéristiques, c'est à dire en particulier leur très faible évolution lors de maintiens prolongés à des températures relativement élevées, typiquement de 1000 h à des températures de 100 à 150°C, ce qui correspond aux conditions d'utilisation de ces composants au cours de la vie du véhicule, pour assurer la constance de leur efficacité,
- Un bon comportement au crash, résultant notamment de ces caractéristiques, et en particulier les conditions d'absorption d'énergie lors dudit crash pour un composant donné, et ce indépendamment des conditions de filage du profilé utilisé pour sa fabrication, dans un souci analogue de reproductibilité,
- Une bonne filabilité : toujours du fait des exigences des productions de grande série, toute amélioration de l'aptitude au filage du fait de l'alliage utilisé, encore connue par la profession sous le nom de filabilité, et se traduisant par un accroissement de la vitesse possible de filage donc par des gains en productivité et des réductions de coût, est bien évidemment appréciable,
- Comme déjà signalé plus haut, il est possible d'assembler la poutre et les absorbeurs par soudage, mais surtout, il arrive fréquemment de souder les absorbeurs sur une platine intermédiaire de fixation, soit avec la poutre, soit avec le reste de la structure ; quant aux autres composants de structure de caisse, ils sont majoritairement assemblés entre eux par soudage.

De ce fait une bonne soudabilité est également requise et une faible incidence de la « zone affectée thermiquement » lors du soudage ou « ZAT » est un atout majeur, avec l'objectif constant de faible dispersion des caractéristiques mécaniques à la fois en différentes zones d'une même pièce et d'une pièce à l'autre.
- Enfin, comme pour la plupart des éléments de structure de caisse automobile, et en particulier ceux qui sont plus ou moins directement exposés aux conditions extérieures comme notamment les composants d'ensembles pare-chocs, un bon comportement en corrosion est particulièrement favorable.

Le tableau 1 ci-dessous récapitule des valeurs chiffrées représentatives de la plupart de ces caractéristiques mesurées sur une grande quantité d'échantillons de profilés dans les conditions détaillées au paragraphe « Exemples ».

**Tableau 1**

| **Solution testée** | **A** | **B** | **C** | **D** |
|---|---|---|---|---|
| **Alliage** | **6060** | **3003** | **3103 + Mg** | **3003 + traction 2%** |
| **Vitesse de filage (m/min)** | 30 | ***60*** | 30 | ***60*** |
| **Trempe** | oui | ***non*** | ***non*** | ***non*** |
| **Traitement thermique de stabilisation** | oui | ***non*** | ***non*** | ***non*** |
| **Moyenne Rp0,2** | 85 | 50 | ***98*** | ***75*** |
| **Ecart type Rp0,2** | 3,4 | ***2,2*** | ***2,0*** | ***2,5*** |
| **Moyenne Rm** | 154 | 103 | 146 | 110 |
| **Ecart type Rm** | 4,7 | ***2,2*** | ***2,0*** | ***2,5*** |
| **Moyenne A%** | **17,3** | ***31,3*** | ***25,5*** | ***25,0*** |
| **Ecart type A%** | 3,2 | 3,0 | 3,0 | 3,0 |
| **Bottelage en crash axial** | sans fissures | sans fissures | sans fissures | sans fissures |
| **Stabilité thermique 1000h à 50°C** | oui | ***oui*** | ***oui*** | ***oui*** |
| **Stabilité thermique 1000h à 100°C** | non | ***oui*** | ***oui*** | ***oui*** |
| **Stabilité thermique 1000h à 150°C** | non | ***oui*** | ***oui*** | ***oui*** |
| **Stabilité thermique 2h à 200°C** | non | ***oui*** | ***oui*** | ***oui*** |
| **Stabilité des C.M. dans la ZAT** | non | ***oui*** | ***oui*** | ***oui*** |

Les alliages de la série 6xxx et en particulier l'alliage 6060, classiquement utilisés notamment pour les absorbeurs de chocs, permettent de satisfaire à la première des conditions pré-listées, relative aux caractéristiques mécaniques, mais moyennant un traitement thermique de mise en solution, trempe sur presse de filage, maturation à température ambiante et stabilisation, avec une incidence non seulement sur le coût mais aussi sur la dispersion de ces valeurs.

Cette dernière considération est confirmée par la valeur des écarts types obtenus, sur la limite d'élasticité et sur la charge de rupture en particulier, et n'est, de ce fait, pas parfaitement satisfaisante quant au respect de la deuxième condition.

En ce qui concerne la troisième condition relative à la stabilité dans le temps de ces caractéristiques liée notamment à leur faible évolution avec la température d'utilisation, les alliages à durcissement structural, comme ceux de la série 6xxx mais aussi de la série 7xxx, révèlent en la matière une faiblesse qui limite leur utilisation plus étendue pour des absorbeurs ou « crash boxes » en particulier.

En effet, un maintien de 1000 h à 100°C, représentatif de conditions réalistes d'utilisation sur véhicule, se traduit par un durcissement conséquent avec en particulier un passage de la fourchette des valeurs de la limite d'élasticité typiquement de 80 - 100 MPa à 150 - 190 MPa et donc une évolution peu satisfaisante des conditions d'absorption d'énergie du composant au cours de la vie du véhicule.

Une solution à ce problème pourrait consister dans l'application d'un traitement thermique de sur-revenu très poussé de l'ordre de 24 h à 260°C qui assure une limite d'élasticité stable dans la fourchette 50 - 80 MPa. Les inconvénients d'un tel traitement sont toutefois multiples : accroissement sensible du coût, de la durée de traitement d'où une réduction de la productivité, températures très élevées et mal adaptées à des fours de revenu classiques.....

Pour ce qui concerne la quatrième condition de comportement au crash, elle peut-être appréciée notamment par des essais dits de « bottelage en crash axial » consistant à soumettre le profilé à un écrasement selon son axe et à analyser à la fois les plis obtenus sur la pièce (absence ou présence de fissures) et l'allure de la courbe « effort déplacement » obtenue telle qu'en figure 2 ; on recherchera en particulier une valeur limitée de l'effort maximal Fmax et relativement proche de l'effort après « stabilisation » Fmoy, avec une réponse la plus plate possible (limitation des fluctuations autour de Fmoy).

Ce comportement, dans le cas des alliages 6xxx, est satisfaisant mais sa reproductibilité est limitée du fait de la dispersion déjà citée des caractéristiques mécaniques.

Par ailleurs, en corrélation avec cette dispersion et en particulier l'instabilité thermique, ce comportement est sensible aux fluctuations des conditions de filage et de traitement thermique.

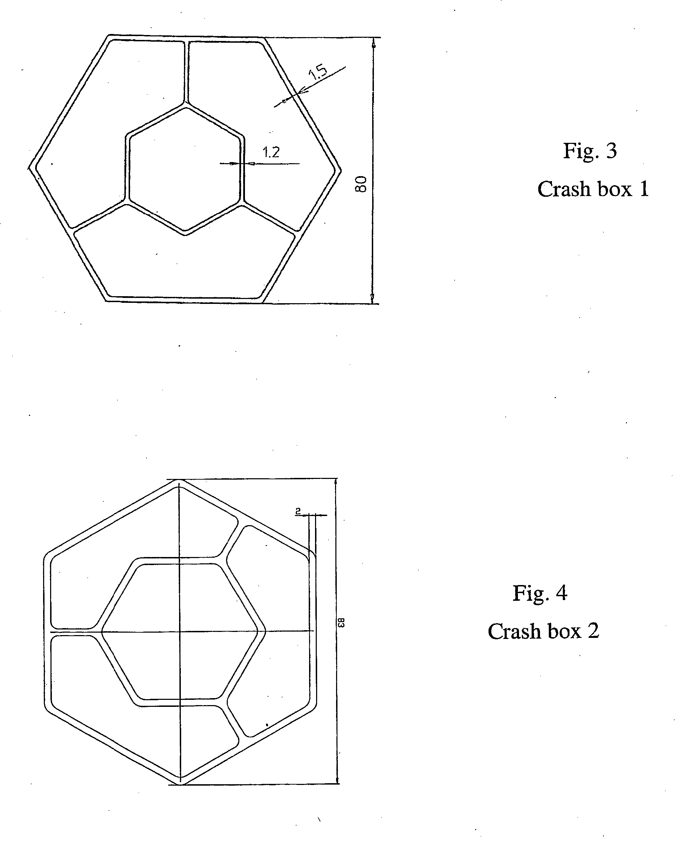

En ce qui concerne la cinquième condition, relative à la filabilité, elle est moyenne dans le cas des alliages 6xxx et en particulier la vitesse de filage maximum sans défauts atteinte pour un profilé en 6060, de section selon la figure 3, s'établit à 30 m/min.

Pour ce qui est de la soudabilité, les profilés en alliage de la famille 6xxx se caractérisent après soudage par des caractéristiques mécaniques, non seulement inférieures dans la « zone affectée thermiquement », mais aussi non uniformes en tous points de ladite zone ; cette hétérogénéité se révèle néfaste au comportement du composant en lui-même mais aussi de l'assemblage soudé.

Enfin, le comportement en corrosion est, de manière connue, correct pour cette famille d'alliages bien que sensiblement inférieur à celui des alliages de la famille 3xxx.

Pour en venir précisément à cette dernière famille d'alliages, elle n'a pas été jusqu'ici utilisée dans le cas de composants de structure de caisse automobile soumis au crash, et en particulier les absorbeurs ou « crash boxes » encore appelés éléments de déformation. C'est précisément l'objet de la présente invention que de l'utiliser à cette fin pour laquelle elle présente des avantages considérables.

Tout d'abord, le tableau 1, notamment mais pas exclusivement dans le cas de l'alliage 3003, révèle des valeurs de limite d'élasticité et de charge de rupture tout à fait satisfaisantes, avec par ailleurs des allongements nettement supérieurs à ceux de la précédente famille, et en outre sans aucun traitement thermique, source de coût et de dispersions.

Le même tableau établit d'ailleurs que la dispersion de ces valeurs est réduite de plus que de moitié par rapport à l'alliage 6060, et ce quel que soit l'alliage 3xxx considéré.

Il en résulte un gain de coût notable par l'absence de traitement thermique et un comportement nettement plus fiable par la réduction sensible des dispersions pré-citées.

Cette fiabilité se trouve renforcée par la parfaite stabilité thermique de ces caractéristiques et de ce comportement, même après des expositions testées jusqu'à 200°C, à l'inverse des alliages de la série 6xxx, ce qui répond parfaitement à la troisième condition, mais aussi à une exigence majeure des constructeurs d'automobiles.

Mais surtout, de manière inattendue, le comportement au crash des alliages de la famille 3xxx, et notamment des alliages 3003, 3103, 3004 et 3005, est très satisfaisant, et, comme déjà évoqué, d'une très grande reproductibilité et homogénéité, avec en particulier, lors des tests de bottelage, une absence totale de fissures et une valeur de Fmax réduite, proche de celle de Fmoy, réduisant donc l'ampleur des fluctuations, comportement requis par les cahiers des charges de tous les constructeurs d'automobiles.

Parmi les autres avantages considérables et inattendus de cette solution, une filabilité nettement améliorée, y compris pour des sections relativement complexes, avec pour les alliages pré-cités et un même profilé tel qu'en figure 3, une vitesse sans défauts de 60 m/min au lieu de 30 m/min dans le cas de l'alliage 6060. Ceci implique des gains en productivité et, à nouveau, en coût conséquents.

En ce qui concerne la soudabilité, et comme avantage supplémentaire, les caractéristiques mécaniques, tout comme elles sont insensibles à une exposition à des températures relativement élevées, ne sont pas affectées par le soudage ; l'atout majeur évoqué dans la sixième condition est donc acquis.

Enfin le comportement en corrosion des alliages 3xxx est sensiblement meilleur que celui des alliages 6xxx.

Enfin, dans les cas où une limite d'élasticité supérieure, de l'ordre de 80 à 100 MPa par exemple, serait impérative, sans pour autant nuire aux autres caractéristiques avantageuses, il est possible de procéder à une addition de magnésium dans un alliage 3xxx pour amener sa teneur dans la fourchette de 0,5 à 1 % selon les besoins ; c'est à ce cas que correspond la solution C du tableau 1, à partir d'un alliage du type 3103 dont la teneur en magnésium a été portée à 0,65 %.

Enfin, il est également possible dans ce même but, avec un résultat moindre, mais significatif néanmoins et surtout sans incidence sur le procédé de filage lui-même, de procéder à un écrouissage avec un taux de déformation permanente pouvant atteindre 5 %, par traction après ledit filage, sur presse, en même temps que l'opération classique de redressage du profilé sur banc de traction.

C'est ce qu'illustre la solution D du tableau 1, avec une déformation permanente de l'ordre de 2 %.

### Exemples

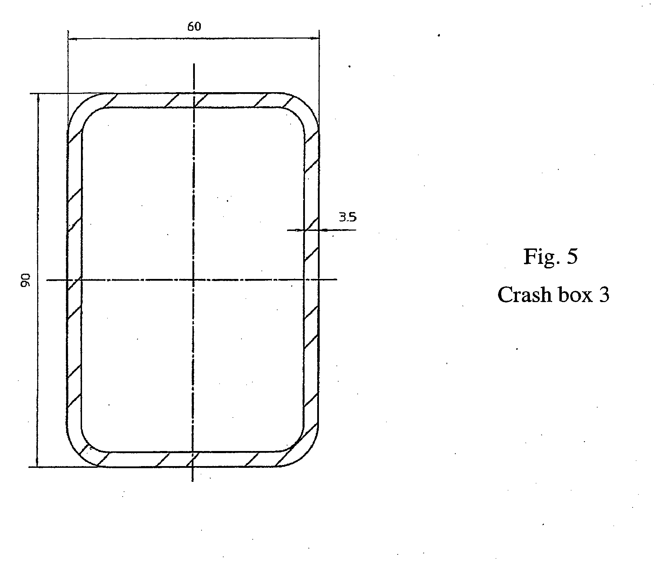

Des profilés de section telle que représentée aux figures 3, 4 et 5 ont été filés de façon classique à partir de billettes de 8 m de longueur découpées en dix blocs. La température des blocs en entrée de filière était voisine de 440 °C.
- Plusieurs vitesses de filage ont été testées de 16 m/min à 60 m/min, le critère d'arrêt étant l'apparition de défauts sur le profilé ou une pression de filage trop élevée pour la presse utilisée.
Les trois géométries de profilés des figures 3,4 et 5 (crash box 1, 2 et 3)ont été testées en alliage 3003 de composition telle qu'au tableau 2 ci-dessous :

**Tableau 2**

| | Si | Fe | Cu | Mn | Mg | Cr | Ni | Zn | Ti | Pb | Na |
|---|---|---|---|---|---|---|---|---|---|---|---|
| mini | 0,15 | 0,50 | 0,05 | 1,05 | | | | | | | |
| visé | 0,20 | 0,55 | 0,08 | 1,12 | | | | | | | |
| maxi | 0,25 | 0,60 | 0,10 | 1,20 | 0,02 | 0,04 | 0,03 | 0,04 | 0,03 | 0,03 | 0,001 |

L'alliage 6060 en référence a été utilisé avec la géométrie de la figure 3 (crash box 1).
Les vitesses de filage optimales obtenues sont de 30 m/min pour l'alliage 6060 et de 60 m/min pour l'alliage 3003. Toutefois, dans ce dernier cas, des vitesses supérieures n'ont pas été testées.
- Les caractéristiques mécaniques ont été mesurées sur 46 échantillons prélevés sur l'ensemble des trois géométries et balayant l'intégralité des vitesses testées pour chaque produit en alliage 3003 ainsi que les différentes épaisseurs de paroi des profilés; il a été procédé de même pour l'alliage 6060 selon la géométrie de la figure 3, avec 12 échantillons prélevés.

Dans le cas de ce dernier alliage, le profilé a subi un traitement thermique de mise en solution et trempe sur presse, maturation à l'ambiante d'un jour et stabilisation à 140°C pendant 8 h.

Les résultats de ces caractérisations sont récapitulés au tableau 3 ci-dessous :

**Tableau 3**

| | | **Rm MPa** | **Rp_{0,2} MPa** | **A %** |
|---|---|---|---|---|
| **Global** - **3003** | **Moyenne** | **103** | **50** | **31,3** |
| | **Ecart-type** | **2,2** | **2,2** | **3,0** |
| 1 - 3003 | Moyenne | 102 | 52 | 28,5 |
| | Ecart-type | 1,9 | 1,2 | 3,4 |
| 2 - 3003 | Moyenne | 106 | 48 | 35,5 |
| | Ecart-type | 1,0 | 1,6 | 0,9 |
| 3 - 3003 | Moyenne | 104 | 48 | 33,3 |
| | Ecart-type | 1,5 | 2,1 | 1,4 |
| **1 - 6060** | **Moyenne** | **154** | **85** | **17,3** |
| | **Ecart-type** | **4,7** | **3,4** | **3,2** |

Y figurent les charges de rupture, limites d'élasticité et allongements à rupture, pour les alliages 3003 associés aux géométries de crash box 1, 2 et 3 selon les figures 3, 4 et 5, et crash box 1 pour l'alliage 6060.

Les valeurs d'écart type montrent clairement la faiblesse de dispersion de ces valeurs pour l'alliage 3003 par rapport à l'alliage 6060, comme détaillé au paragraphe précédent.

Y apparaissent également les plus faibles valeurs de la limite d'élasticité et les valeurs nettement plus élevées de l'allongement dans le cas de l'alliage 3003, par rapport au cas de l'alliage 6060, caractéristiques généralement favorables au comportement au choc.
- Des essais de « bottelage en crash axial » ont également été effectués sur des profilés de sections conformes aux figures 3 et 4 (crash box 1 et 2). Ils consistent dans la réalisation de tranches desdits profilés de 200 mm, à les positionner verticalement selon leur axe, et à appliquer en partie supérieure un effort sur toute la surface destiné à amener la longueur du profilé de 200 à environ 70 mm ; la courbe « effort-déplacement » du type de celle de la figure 2 est enregistrée et analysée, notamment en ce qui concerne la valeur de Fmax et la valeur moyenne de l'effort après stabilisation Fmoy, ainsi que la fluctuation autour de cette valeur qui doit être la plus faible possible. L'analyse des plis réalisés du fait du bottelage sur la tranche de profilé, assimilable à une « crash box », est également effectuée de manière à détecter toute fissure non souhaitable. Cette analyse peut être affinée avec attribution d'une note de 0 (fissures extrêmement prononcées et profondes) à 20 (absence totale de fissures et d'amorces) ; cette note est appelée indice de crash IC. L'analyse peut être plus sommaire avec une réponse binaire « oui/non » selon la présence ou l'absence de fissures.

Ces essais ont été menés sur profilés en 3003, ainsi qu'en 6060, les profilés dans ce dernier cas ayant subi un traitement thermique de mise en solution et trempe sur presse, maturation à l'ambiante d'un jour et stabilisation à 140°C pendant 8 h.

Les résultats sont récapitulés au tableau 4 ci-dessous pour les sections de profilés dénommés crash box 1 et 2 en figures 3 et 4:

**Tableau 4**

| **Essais de bottelage** | | | | |
|---|---|---|---|---|
| **Section - Alliage** | | **IC** | **Fmax (kN)** | **Fmoy (kN)** |
| **1 - 3003** | **Moyenne** | 20 | 40 | 30 |
| | **Ecart type** | | 2,1 | 1,1 |
| **2 - 3003** | **Moyenne** | 20 | 54 | 40 |
| | **Ecart type** | | 3,1 | 1,9 |
| **2 - 6060** | **Moyenne** | 20 | 87 | 64 |
| | **Ecart type** | | 5,9 | 3,1 |

La bonne valeur de l'indice de crash traduit dans tous les cas une absence totale de fissures ; mais dans le cas de l'alliage 3003 la valeur de Fmax est réduite, proche de celle de Fmoy, avec une réduction corrélative de l'ampleur des fluctuations pré-citées, et surtout ces valeurs sont très peu dispersées.
- Enfin, ces caractérisations ont également été réalisées sur un alliage du type 3103 avec addition de magnésium pour porter sa teneur à 0,65 %, ainsi que sur un alliage 3003 dont le profilé a été soumis après filage, sur banc de traction sur presse, à un écrouissage correspondant à une déformation permanente en traction de 2 %.

L'ensemble de ces résultats est résumé au tableau 5 ci-dessous, identique au tableau 1.

**Tableau 5**

| **Solution testée** | **A** | **B** | **C** | **D** |
|---|---|---|---|---|
| **Alliage** | **6060** | **3003** | **3103 + Mg** | **3003 + traction 2%** |
| **Vitesse de filage (m/min)** | 30 | ***60*** | 30 | ***60*** |
| **Trempe** | oui | ***non*** | ***non*** | ***non*** |
| **Traitement thermique de stabilisation** | oui | ***non*** | ***non*** | ***non*** |
| **Moyenne Rp0,2** | 85 | 50 | ***98*** | ***75*** |
| **Ecart type Rp0,2** | 3,4 | ***2,2*** | ***2,0*** | ***2*,*5*** |
| **Moyenne Rm** | 154 | 103 | 146 | 110 |
| **Ecart type Rm** | 4,7 | ***2,2*** | ***2,0*** | ***2,5*** |
| **Moyenne A%** | 17,3 | ***31,3*** | ***25,5*** | ***25,0*** |
| **Ecart type A%** | 3,2 | 3,0 | 3,0 | 3,0 |
| **Bottelage en crash axial** | sans fissures | sans fissures | sans fissures | sans fissures |
| **Stabilité thermique 1000h à 50°C** | oui | ***oui*** | ***oui*** | ***oui*** |
| **Stabilité thermique 1000h à 100°C** | non | ***oui*** | ***oui*** | ***oui*** |
| **Stabilité thermique 1000h à 150°C** | non | ***oui*** | ***oui*** | ***oui*** |
| **Stabilité thermique 2h à 200°C** | non | ***oui*** | ***oui*** | ***oui*** |
| **Stabilité des C.M. dans la ZAT** | non | ***oui*** | ***oui*** | ***oui*** |

Les divers avantages pre-cités y apparaissent de façon synthétique avec notamment :
- Un très bon comportement au choc, ou crash, des alliages de la famille 3xxx,
- Une très faible dispersion des caractéristiques mécaniques et donc une très grande reproductibilité de ce comportement indépendamment des conditions de filage; et sans traitement thermique,
- Une sensibilité très réduite aux opérations de cataphorèse et cuisson des peintures et une très grande stabilité thermique de ce comportement dans les conditions réelles d'utilisation sur véhicule automobile,
- Une sensibilité très réduite également de ces mêmes paramètres vis à vis du soudage et leur très faible variabilité en particulier dans la zone affectée thermiquement,
- Une très bonne filabilité, y compris pour des sections de profilé relativement complexes, avec des vitesses de filage doubles de celles des alliages de la famille 6xxx, et notamment les alliages du type 6060, dans les mêmes conditions.

## Revendications

1. Composant de structure de caisse de véhicule automobile réalisé à partir d'un profil extradé en aluminium, destiné à absorber l'énergie de façon irréversible lors de collisions entre le véhicule et un obstacle et choisi parmi les longerons de seuil de portière, pieds milieu, avant ou arrière, renforts latéraux de portière, rails anti-intrusion ou composants d'un ensemble pare-chocs, **caractérisé en ce qu'**il est réalisé à partir d'un profilé extrudé en alliage d'aluminium de la série 3xxx selon la nomenclature de l' « Aluminium Association » correspondant à la norme NF A 02-104.

2. Composant de structure selon la revendication 1, **caractérisé en ce que** ledit alliage d'aluminium est choisi parmi les alliages du type 3003, 3004, 3005 ou 3103 selon la nomenclature de l' « Aluminium Association ».

3. Composant de structure selon la revendication 1, **caractérisé en ce que** ledit alliage d'aluminium est obtenu à partir d'un alliage de la série 3xxx selon la norme NF A 02-104, dans lequel on a procédé à une addition complémentaire de magnésium.

4. Composant de structure selon la revendication 3, **caractérisé en ce que** ladite addition de magnésium est réalisée de manière à porter sa teneur dans la fourchette de 0,5 à 1 %.

5. Composant de structure selon la revendication 1, **caractérisé en ce que** le profilé extrudé en alliage d'aluminium de la série 3xxx est soumis à un écrouissage avec un taux de déformation permanente jusqu'à 5 %, typiquement par traction dudit profilé.

6. Composant de structure selon l'une des revendications 1 à 5, **caractérisé en ce qu'**il est choisi parmi les absorbeurs de chocs, encore appelé éléments de déformation ou « crash boxes », destinés à réaliser l'interface entre la poutre de pare-chocs et le reste de la structure de caisse ou support longitudinal du véhicule.

7. Composant de structure selon l'une des revendications 1 à 6, **caractérisé en ce qu'**il est assemblé au reste de la structure de caisse par soudage.

## Patentansprüche

1. Strukturbauteil einer Kraftfahrzeugkarosserie, welches aus einem Strangpressprofil aus Aluminiumlegierung hergestellt ist und zur irreversiblen Aufnahme der Energie bei Kollisionen zwischen dem Fahrzeug und einem Hindernis dient, wobei das Bauteil ausgewählt ist unter den Schwellern, B-, A- oder C-Säulen, seitlichen Türverstärkungen, Türaufprallträgern oder Bauteilen einer Stoßfängeranordnung und **dadurch gekennzeichnet ist, dass** es hergestellt ist aus einem Strangpressprofil aus einer Aluminiumlegierung der Serie 3xxx gemäß der Nomenklatur der « Aluminium Association », die der Norm NF A 02-104 entspricht.

2. Strukturbauteil nach Anspruch 1, **dadurch gekennzeichnet, dass** die Aluminiumlegierung ausgewählt ist unter der Legierungen des Typs 3003, 3004, 3005 oder 3103 gemäß der Nomenklatur der « Aluminium Association ».

3. Strukturbauteil nach Anspruch 1, **dadurch gekennzeichnet, dass** die Aluminiumlegierung hergestellt ist aus einer Legierung der Serie 3xxx gemäß der Norm NF A 02-104, der zusätzlich Magnesium zugegeben wurde.

4. Strukturbauteil nach Anspruch 3, **dadurch gekennzeichnet, dass** die Zugabe von Magnesium so durchgeführt wird, dass sein Gehalt im Bereich zwischen 0,5 und 1 % liegt.

5. Strukturbauteil nach Anspruch 1, **dadurch gekennzeichnet, dass** das Strangpressprofil aus Aluminiumlegierung der Serie 3xxx einer Kaltverfestigung mit einem Prozentsatz an bleibender Verformung von bis zu 5 % unterworfen wird, typischerweise durch Recken des Profils.

6. Strukturbauteil nach einem der Ansprüche 1 bis 5, **dadurch gekennzeichnet, dass** es ausgewählt ist unter den Stoßaufnehmern, die auch Deformationselemente oder Crashboxen genannt werden und dazu dienen, die Schnittstelle zwischen dem Stoßfängerträger und dem Rest der Karosseriestruktur oder dem Längsträger des Fahrzeugs zu bilden.

7. Strukturbauteil nach einem der Ansprüche 1 bis 6, **dadurch gekennzeichnet, dass** es mit dem Rest der Karosseriestruktur verschweißt wird.

## Claims

1. Motor vehicle body structural component made from an extruded aluminum alloy profile, intended to irreversibly absorb energy during a collision between the vehicle and an obstacle, said component having been chosen from amongst the vehicle's sills, B-, A- or C-pillars, door side bracings, side impact beams or components of a bumper assembly and **characterized in that** it is made from a series 3xxx extruded aluminum alloy profile, according to the nomenclature of the "Aluminium Association", corresponding to the NF A 02-104 standard.

2. Structural component according to claim 1, **characterized in that** said aluminum alloy is selected from amongst type 3003, 3004, 3005 or 3103 alloys, according to the nomenclature of the "Aluminium Association".

3. Structural component according to claim 1, **characterized in that** said aluminum alloy is obtained from a series 3xxx alloy according to the NF A 02-104 standard, to which extra magnesium has been added.

4. Structural component according to claim 3, **characterized in that** said magnesium is added in such a manner as to bring its content to within 0.5 and 1%.

5. Structural component according to claim 1, **characterized in that** the series 3xxx extruded aluminum alloy profile undergoes work hardening with a permanent deformation ratio of up to 5%, typically achieved by pulling said profile.

6. Structural component according to one of claims 1 to 5, **characterized in that** it is selected from amongst the shock absorbers, still referred to as deformation elements or "crash boxes", intended to form an interface between the bumper beam and the rest of the vehicle's body structure or longitudinal support member.

7. Structural component according to one of claims 1 to 6, **characterized in that** it is assembled onto the rest of the body structure by welding
